# EUROPEAN PATENT APPLICATION

(11) **EP 1 000 653 A2**
(43) Date of publication of application: **17.05.2000**
(21) Application number: 99308816.0
(22) Date of filing: 05.11.1999
(51) Int. Cl.: B01D 53/94, F01N 3/20, B01J 23/00, B01J 23/54

(54) **Exhaust gas purifying apparatus**

(30) Priority: 05.11.1998 JP 31429298
(71) Applicant: ISUZU CERAMICS RESEARCH INSTITUTE CO., LTD., Fujisawa-shi, Kanagawa-ken (JP)
(72) Inventor: Naito, Isao, Kanagawa-ken (JP); Unno, Yasuaki, Kanagawa-ken (JP); 0osumi, Kazuo, Kanagawa-ken (JP)
(74) Representative: Jenkins, Peter David

(57) **Abstract**

An exhaust gas purifying apparatus provides an exhaust gas purifying catalyst (32) including NOx decomposing and adsorpting catalyst particles (33) of brown millerite type composite oxide and fine NOx reducing catalyst particles (34) of noble metal dispersed on and adhered to the surface of the brown millerite type composite oxide particles (33). The NOx reducing catalyst particles (34) are at least one selected from the group consisting of rhodium (Rh), gold (Au), palladium (Pd), ruthenium (Ru), iridium (Ir) and platinum (Pt). A temperature adjusting portion (41) is consisted of the brown millerite type composite oxide. The temperature adjusting portion (41) maintaines the exhaust gas purifying catalyst (32) in its active temperature region.

## Description

The present invention relates to an exhaust gas purifying apparatus for removing nitrogen oxides contained in exhaust gases of Diesel engine, and particularly to an exhaust gas purifying apparatus which is wide in active temperature region and exhibits the stable nitrogen oxide removing ability for a long period of time.

In the past, the noble metal catalyst such as a ternary catalyst has been used for removing nitrogen oxide (NOx) contained in exhaust gases, but it could have not been applied to the Diesel engine due to the problem such as the reaction temperature, poisoning or the like.

To cope with the problem as described above, the applicant has been proposed an exhaust gas purifying apparatus which attempts to provide higher activation and longer life of an exhaust gas purifying catalyst which is dispersed NOx reducing catalyst particles on the surface of a brown millerite type composite oxide particles as a NOx decomposing and adsorpting catalyst for nitrogen oxide (NOx). However, it has been found that the aforementioned exhaust gas purifying catalyst has an active temperature region (temperature window). In other words, there exists a problem in that an active temperature region (temperature window) for removing a nitrogen oxide (NOx) is narrow, failing to the stable ability for removing the nitrogen oxide (NOx). Further, the exhaust gas purifying catalyst lowers in nitrogen oxide removing ability due to presence of sulfur oxide (SOx) which is contained in the exhaust gases from the Diesel engine.

It has been known that the nitrogen oxide removing catalyst lowers in nitrogen oxide removing ability due to presence of sulfur oxide (SOx).

In view of the aforementioned problem, it is an aim of the present invention to provide an exhaust gas purifying apparatus which displays the stable nitrogen oxide removing ability for a long period of time by maintaining a temperature of an exhaust gas purifying catalyst in the best active temperature region (temperature window) for removing a nitrogen oxide.

It is another aim of the present invention to provide an exhaust gas purifying apparatus which displays a high nitrogen oxide removing rate even under presence of sulfur oxide.

For achieving the above-described aim, the present invention provides an exhaust gas purifying apparatus comprising an exhaust gas purifying catalyst including brown millerite type composite oxide particles expressed by either of the general formulae A₃B₄O₉, A₂B₂O₅ or AB₂O₄ (A and B are constituent elements) as NOx decomposing and adsorpting catalyst and fine NOx reducing catalyst particles dispersed on and adhered to the surface of the brown millerite type composite oxide particles, an exhaust gas purifying filter comprised a carrier carrying the exhaust gas purifying catalyst, a conductive sensor comprised the brown millerite type composite oxide, and an electronic controller for controlling the electric power supply to an electric heater surrounding the carrier so as to maintain the exhaust gas purifying catalyst in active temperature region.

A feature of the exhaust gas purifying apparatus is that composite particles of an exhaust gas purifying catalyst includes brown millerite type composite oxide particles expressed by either of the general formulae A₃B₄O₉, A₂B₂O₅ or AB₂O₄ (A and B are constituent elements) and fine NOx reducing catalyst particles selected from the group consisting of rhodium (Rh), gold (Au), palladium (Pd), ruthenium (Ru), iridium (Ir) and platinum (Pt), and the composite particles are disposed on the recess portions formed on the surface of at least one fiber selected from the group consisting of alumina fiber, silica fiber and composite oxide fiber of alimina and silica.

A feature of the exhaust gas purifying apparatus is that brown millerite type composite oxide particles expressed by either of the general formulae A₃B₄O₉, A₂B₂O₅ or AB₂O₄ (A and B are constituent elements) and fine NOx reducing catalyst particles are carried on the surface of at least two fibers selected from the group consisting of alumina fiber, silica fiber and composite oxide fiber of alimina and silica, and said fibers include the first fiber in which said NOx reducing catalyst particles is selected from the group consisting of rhodium (Rh), gold (Au), palladium (Pd), ruthenium (Ru), iridium (Ir) and platinum (Pt) and the second fiber in which said NOx reducing catalyst particles is different from the said NOx reducing catalyst particles in said first fiber and is selected from the group consisting of rhodium (Rh), gold (Au), palladium (Pd), ruthenium (Ru), iridium (Ir) and platinum (Pt) and said first and second fibers being mixed.

The brown millerite type composite oxide become high in conductivity when a defect in oxygen occurs in the active temperature region (temperature window). Accordingly, the temperature of the brown millerite type composite oxide is presumed from the conductivity when the defect in oxygen occurs in the brown millerite type composite oxide and electric power supplied to an electric heater for heating the exhaust gas purifying filter from a power battery is always controlled to obtain active temperature region of the brown millerite type composite oxide.

By the present invention, two kinds of fibers selected from the group consisting of alumina fibers, silica fibers and composite oxide fibers of alumina and silica are mixed, one comprising a fiber carrying brown millerite type composite oxide which is excellent in nitrogen oxide removing ability but subject to weaken by sulfur oxide (SOx) and the other comprising a fiber carrying brown millerite type composite oxide which is not subject to weaken by sulfur oxide (SOx) but inferior to a nitrogen oxide removing ability.

The brown millerite type composite oxide particles the surface of which NOx reducing catalyst particles such as rhodium (Rh), iridium (Ir), etc. dispersed on and adhered to are selectively carried on the fine and even recess portions or pores formed on the surface of alumina fibers, silica fibers or composite oxide fiber of alumina and silica. The provision of the fine and even recess portions or pores on the surface of the fiber enhances the close-contact force between the catalyst and the fiber due to an anchor effect of the recess portions or pores, increases a contact area with exhaust gases and enhances the nitrogen oxide removing ability under presence of sulfur oxide.

According to the present invention, the fine NOx reducing catalyst particles of noble metal are dispersed on the surface of NOx decomposing and adsorpting catalyst particles of brown millerite type composite oxide expressed by the general formulae A₃B₄O₉, A₂B₂O₅ or AB₂O₄ (A and B are constituent elements) to constitute the exhaust gas purifying catalyst, and the electric energy supplied to the exhaust gas purifying filter which is composed a carrier carrying the exhaust gas purifying catalyst is controlled on the basis of a signal from a conductive sensor. Therefore, the exhaust gas purifying catalyst is maintained the catalyst active temperature region (window) to always display the stable nitrogen oxide removing ability.

On the basis of the detected conductivity of the brown millerite type composite oxide particles, the brown millerite type composite oxide particles are adjusted to the optimum temperature whereby the brown millerite type composite oxide particles display the best catalyst activity.

In case a composite of brown millerite type composite oxide particles expressed by either of the general formulae A₃B₄O₉, A₂B₂O₅ or AB₂O₄ (A and B are constituent elements) and at least one NOx reducing catalyst particles selected from the group consisting of rhodium (Rh), ruthenium (Ru), gold (Au), palladium (Pd), iridium (Ir) and platinum (Pt) are present within a recess portions on the surface of alumina fiber, silica fiber or composite oxide fiber of alumina and silica, the exhaust gas purifying filter is stable in composition under presence of sulfur oxide, high in the rate for removal of nitrogen oxide and high in durability.

These and other aims and features of the invention will become more apparent upon a perusal of the following description taken in conjunction with the accompanying drawings wherein:

FIG. 1 is a side sectional view of an exhaust gas purifying apparatus by the present invention.

FIG. 2 is a side sectional view showing, in a large scale, main parts of the exhaust gas purifying apparatus by a partly modified embodiment.

FIG. 3 is a schematic constitutional view of the exhaust gas purifying apparatus.

FIG. 4 is a diagram representative of the nitrogen oxide removing characteristics according to the evaluation test of the exhaust gas purifying apparatus by the present invention and comparative article.

FIG. 5 is a diagram showing a relationship between the particle diameter of NOx reducing catalyst particles and the nitrogen oxide removing rate according to the evaluation test of the exhaust gas purifying apparatus by the present invention.

FIG. 6 is a perspective view of an exhaust gas purifying filter by the present invention.

FIG. 7 is a perspective view showing, in a large scale, main parts of the exhaust gas purifying filter.

FIG. 8 is a side view schematically showing NOx reducing catalyst particles of the exhaust gas purifying filter.

FIG. 9 is a diagram representative of the performance of the exhaust gas purifying filter for removing a nitrogen oxide by the present invention and comparative examples.

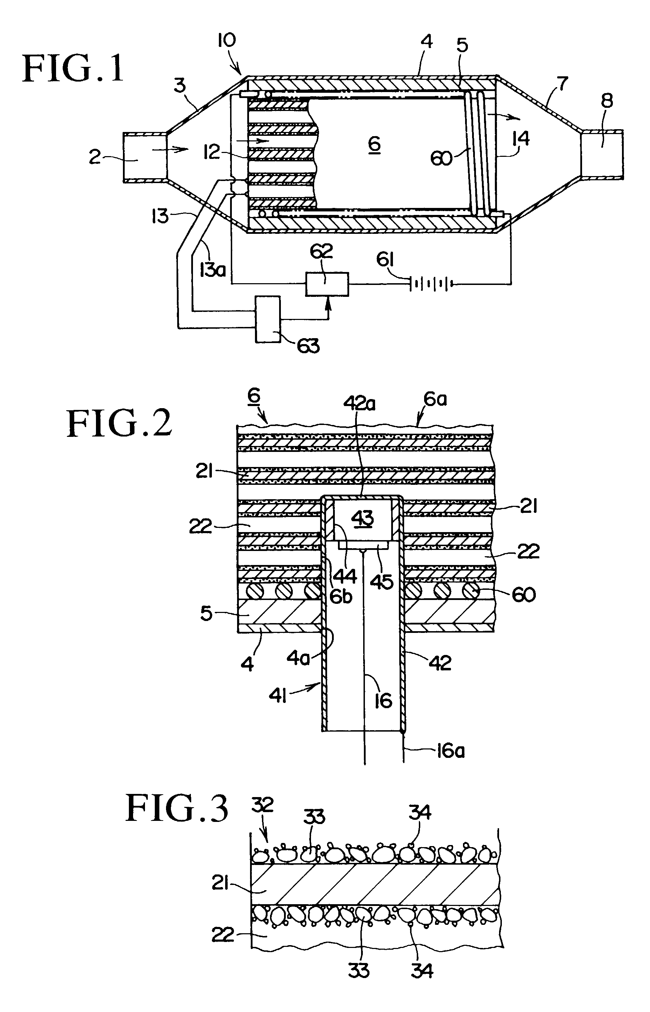

As shown in FIG. 1, an exhaust gas purifying apparatus 10 has a cylindrical housing 4 which interiorly receives an exhaust gas purifying filter 6 through an insulating material 5. Around the outer peripheral surface of the exhaust gas purifying filter 6 is spirally wound an electric heater 60 made of such as a nickel and aluminum alloy wire and a nickel aluminum chrome and iron alloy wire. An inlet pipe 2 is connected to one end of the housing 4 through a conical tube 3, and an outlet pipe 8 is connected to the other end of the housing 4 through a conical tube 7. The inlet pipe 2 is connected to an exhaust pipe extending from an exhaust port of the Diesel engine, and the outlet pipe is connected to a silencer. The electric heater 60 is connected to a power battery 61 in series with a variable resistor 62.

As shown in FIG. 2, the exhaust gas purifying filter 6 comprises a honeycomb carrier 6a formed of porous ceramics, the honeycomb carrier 6a having a number of passages 22 in section of circular, rectangular or hexagonal disposed parallel with one another, and an exhaust gas purifying catalyst 32 carried on a wall portion 21 of each passage 22. As shown in FIG. 3, in the exhaust gas purifying catalyst 32, fine NOx reducing catalyst particles 34 of noble metal are dispersed on and adhered to the surface of brown millerite type composite oxide particles 33 as a NOx decomposing and adsorpting catalyst.

As shown in FIG. 1, when the exhaust gases pass through the passages from the inlet end 12 of the exhaust gas purifying filter 6 via the conical tube 3, the exhaust gases react with the exhaust gas purifying catalyst 32 of the wall portion 21 to remove the nitrogen oxide and flow through the outlet end 14, the conical tube 7 and the outlet pipe 8.

For the purpose of detecting the conductivity of the brown millerite type composite oxide particles 33, a pair of electrode wires 13 and 13a of a conductive sensor 41 are connected leaving a predetermined spacing to the inlet end 12 of the exhaust gas purifying filter 6. The electrode wires 13 and 13a may be provided at the outlet end 14 or in the middle portion of the exhaust gas purifying filter 6. Since the conductivity of the exhaust gas purifying filter 6 varies with the temperature of the exhaust gas purifying catalyst 32, the conductive sensor 41 can be constituted as a temperature switch 41a.

As shown in FIGS. 2 and 3, according to the present invention, the exhaust gas purifying catalyst 32 of the exhaust gas purifying filter 6 is constituted as the conductive sensor 41 or the temperature switch 41a, and electric energy supplied to the opposite ends 12 and 14 of the exhaust gas purifying filter 6 from the power battery 61 or an ACG (Alternating Current Generator) mounted on the vehicle and is adjusted by the temperature switch 41a so that the temperature of the exhaust gas purifying catalyst 32 is maintained in the optimum active temperature region (temperature window). The temperature switch 41a comprises the electrode wires 13 and 13a connected to the exhaust gas purifying catalyst 32 or the inlet end 12 of the exhaust gas purifying filter 6 leaving a predetermined spacing. An electronic controller 63 supplies output signals for controlling the resistance of the variable resistor 62 to heat the brown millerite type composite oxide particles 33, on the basis of a signal of conductivity between the electrode wire 13 and 13a, thus the brown millerite type composite oxide particles 33 may always display the high catalyst activity.

The exhaust gas purifying catalyst 32 according to the present invention is constituted such that the fine NOx reducing catalyst particles 34 are dispersed on the surface of the brown millerite type composite oxide particles 33 expressed by either of the general formulae A₃B₄O₉, A₂B₂O₅ or AB₂O₄ (A and B are constituent elements). The constituent elements A and B of the brown millerite type composite oxide particles 33 comprise at least one of rare earth elements, alkaline earth elements and metal elements selected from the group consisting of barium (Ba), yttrium (Y), strontium (Sr), calcium (Ca), titanium (Ti), hafnium (Hf), zinc (Zn), indium (In), holmium (Ho), gadolinium (Gd), dysprosium (Dy), terbium (Tb), europium (Eu), erbium (Er), neodymium (Nd), cerium (Ce) and zirconium (Zr). The NOx reducing catalyst particles 34 comprise at least two elements selected from the group consisting of rhodium (Rh), gold (Au), palladium (Pd), ruthenium (Ru), iridium (Ir) and platinum (Pt). The NOx reducing catalyst particles 34 is smaller than 25 nm in average particle diameter.

### EXAMPLE 1

For preparing the exhaust gas purifying filter 6 using the exhaust gas purifying catalyst 32 according to the present invention, first, the brown millerite type catalyst powder of which composition is Ba₃₋ₐSrₐY₄₋ₐZrₐO₉ (a=0 to 0.6) are synthesized and then crushed, and the brown millerite type composite oxide powder and rhodium (Rh) are mixed with a solution of rhodium salt so that the mixing rate is 1 : 1 in mol ratio to prepare a slurry.

Then, the slurry is impregnated in the honeycomb carrier 6a formed of cordierite, and surplus slurry is removed. After heating process for 1 to 4 hours at a temperature of 500 to 1100 degrees Centigrade is carried out, activation process is carried out.

It has been found from observation by way of a scanning type electronic microscope (SEM) and a transmission type electronic microscope (TEM) that in the exhaust gas purifying catalyst 32 of the exhaust gas purifying filter 6, NOx reducing catalyst particles 34 of rhodium (Rh) of which particle diameter is a few nm to scores of nm are dispersed and united on the surface of the brown millerite type composite oxide particles 33. The particle diameter of the brown millerite type composite oxide particles 33 is sub-micron to a few micron. It has been also found that the shape and the particle diameter of the brown millerite type composite oxide particles 33 and the NOx reducing particles 34 of rhodium (Rh) greatly vary with the conditions of the heat treatment (activation process).

According to the present invention, the exhaust gas purifying catalyst 32 of the exhaust gas purifying filter 6 is energized by the power battery 61 through the variable resistor 62. When the temperature of the brown millerite type composite oxide particles 33 of the exhaust gas purifying catalyst 32 carried on the surface of the honeycomb carrier 6a rises and the conductivity becomes smaller than a predetermined value, the resistance of the variable resistor 62 increases due to the output of the electronic controller 63 on the basis of the signal of the temperature switch 41a (for example, a sliding element of the variable resistor 62 is driven by an actuator due to the output of the electronic controller 63 to increase the resistance of the variable resistor 62) so that the exhaust gas purifying catalyst 32 is not heated and the temperature of the brown millerite type composite oxide particles 33 lowers. When the temperature of the brown millerite type composite oxide particles 33 becomes lower than a predetermined value, the temperature switch 41a is closed to heat the brown millerite type composite oxide particles 33 again. In this manner, the brown millerite type composite oxide particles 33 is controlled so as to hold the catalyst active temperature region (temperature window).

An exhaust gas purifying catalyst 32A, not shown, is prepared, which is substituted, in place of barium (Ba) and yttrium (Y) in the exhaust gas purifying catalyst 32, by two elements selected from the group consisting of strontium (Sr), calcium (Ca), titanium (Ti), hafnium (Hf), zinc (Zn), indium (In), holmium (Ho), gadolinium (Gd), dysprosium (Dy), terbium (Tb), europium (Eu), erbium (Er), neodymium (Nd), cerium (Ce) and zirconium (Zr). An exhaust gas purifying catalyst 32B, not shown, is prepared, which is substituted, in place of rhodium (Rh) in the exhaust gas purifying catalyst 32, by one element selected from the group consisting of ruthenium (Ru), gold (Au), palladium (Pd), iridium (Ir) and platinum (Pt). The evaluation tests were conducted with respect to these exhaust gas purifying catalysts 32, 32A and 32B.

That is, the exhaust gas purifying apparatus 10 using the exhaust gas purifying catalysts 32, 32A and 32B, respectively, is connected to the exhaust pipe of the Diesel engine having displacement of 4331 cc to measure the quantity of nitrogen oxide (NOx) contained in the exhaust gases at the inlet of the exhaust gas purifying filter 6 and the quantity of nitrogen oxide (NOx) contained in the exhaust gases at the outlet of the exhaust gas purifying filter 6 to thereby measure the activity for removing the nitrogen oxide (NOx) of the exhaust gas purifying catalysts 32, 32A and 32B. The evaluation test was conducted by varying the load and the rotational speed (r.p.m.) of the Diesel engine on the supposition of traveling of the vehicle in a city area.

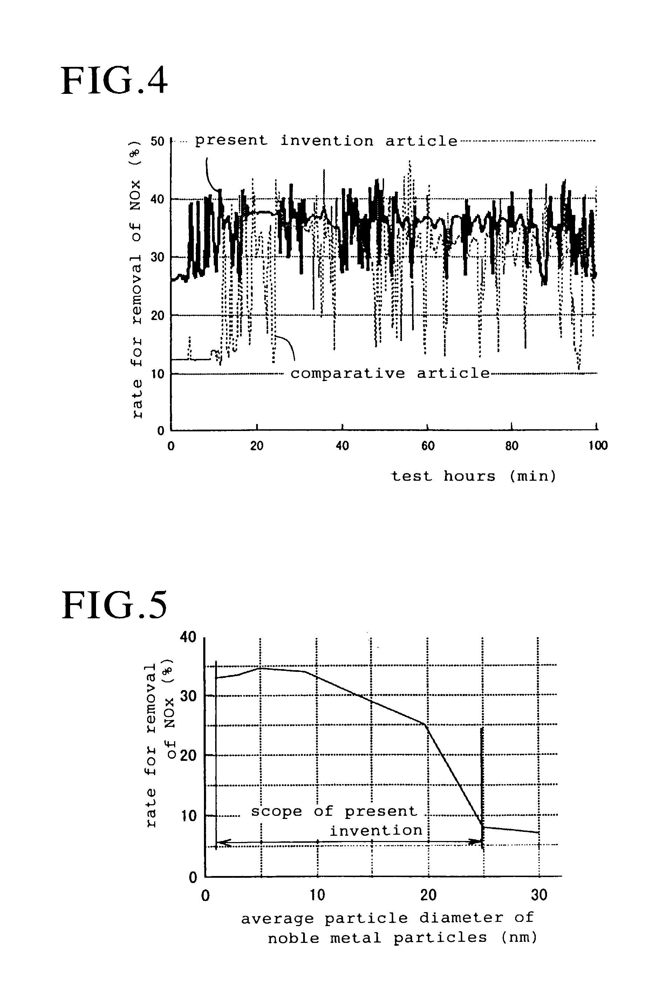

FIG. 4 shows the result of evaluation test of the exhaust gas purifying catalyst 32 in which NOx reducing catalyst particles 34 of rhodium (Rh) of 9 nm of average particle diameter are dispersed on and adhered to the surface of the brown millerite type composite oxide particles 33 of 4 micron of average particle diameter. The brown millerite type composite oxide particles 33 is expressed by the general formula Ba_{2.97}Sr_{0.03}Y_{3.8}Zr_{0.2}O₉. As indicated by the solid line in FIG. 4, the exhaust gas purifying apparatus 10 according to the present invention provided with the temperature switch 41a showed the stable nitrogen oxide removing rate, as compared with the exhaust gas purifying apparatus 10 (comparative article) not provided with the temperature switch 41a indicated by the broken line.

In the exhaust gas purifying catalyst 32B using brown millerite type composite oxide particles 33 expressed by the general formula Ba_{2.97}Sr_{0.03}Y_{3.8}Zr_{0.2}O₉ and the rhodium (Rh) particles 34, it has been found as shown in FIG. 5, that the particle diameter of the rhodium (Rh) as the NOx reducing catalyst particles greatly affects on the nitrogen oxide removing rate. It is preferable that the particle diameter of the NOx reducing catalyst particles 34 is as small as possible. The particle diameter of the NOx reducing catalyst particles 34 is preferably less than 25 nm, and the particle diameter of the NOx reducing catalyst particles 34 is more preferably 20 nm.

In the embodiment shown in FIG. 2, the conductive sensor 41 is inserted into the cylindrical portion 6b provided in the exhaust gas purifying filter 6 from the opening 4a provided in the peripheral wall of the housing 4. In the conductive sensor 41, a detector 43 is inserted into a protective tube 42 made of stainless steel. In the detector 43, a disk-like pellet composed of brown millerite type composite oxide particles and fine NOx reducing catalyst particles is calcined, and an insulating coating layer 44 of ceramics is provided on the peripheral wall surface of the calcined member (which has the same constitution as the exhaust gas purifying catalysts 32, 32A or 32B). A lead wire 16a is connected to the protective tube 42 in which one end of the detector 43 is pressed against the closed end wall 42a, and a lead wire 16 is connected to the other end of the detector 43 through a conductive plate 45. If the lead wires 16 and 16a are connected in place of the electrode wires 13 and 13a shown in FIG. 1, the operation similar to the exhaust gas purifying apparatus 10 shown in FIG. 1 takes place to obtain the effects similar thereto.

Though the exhaust gas purifying catalyst 32 are carried on the honeycomb carrier 6a in the above described embodiment, the exhaust gas purifying catalyst comprising of the NOx decomposing and adsorpting catalyst of the brown millerite composite oxide particles and the NOx reducing catalyst particles of noble metals may be carried on alumina fiber, silica fiber or composite oxide fiber of alumina and silica, in place of the honeycomb carrier 6a. In order to obtain high rate for removal of nitrogen oxide (NOx) in presence of sulfur oxide (SOx), alumina fiber, silica fiber or composite oxide fiber of alumina and silica carried the NOx decomposing and adsorpting catalyst of the brown millerite type composite oxide particles and the NOx reducing catalyst particles of rhodium (Rh) most of which are dispersed on and adhered to the surface of the the brown millerite type composite oxide particles and alumina fiber, silica fiber or composite oxide fiber of alumina and silica carried the NOx decomposing and adsorpting catalyst of the brown millerite type composite oxide particles and the NOx reducing catalyst particles of iridium (Ir) most of which are dispersed on and adhered to the surface of the the brown millerite type composite oxide particles are composed. The reason why the exhaust gas purifying catalyst of the composed fibers performs high rate for removal of nitrogen oxide (NOx) in presence of sulfur oxide (SOx) is as follows:

The brown millerite type composite oxide varies in crystal construction with the kind of NOx reducing catalysts of noble metals to be dispersed on and adhered to the surface of the brown millerite type composite oxide. When NOx reducing catalyst particles of rhodium (Rh) are dispersed on and adhered to the surface of the brown millerite type composite oxide particles, the brown millerite type composite oxide of A₂B₂O₅ type or A₃B₄O₉ type which is high in nitrogen oxide removing rate can be obtained but NOx reducing catalyst particles of rhodium (Rh) are subject to poisoning of sulfur oxide. On the other hand, when NOx reducing catalyst particles of iridium (Ir) are dispersed on and adhered to the surface of the brown millerite type composite oxide particles, the brown millerite type composite oxide of AB₂O₄ type which is low in nitrogen oxide removing rate can be obtained but NOx reducing catalyst particles of iridium (Ir) are not subject to poisoning of sulfur oxide. Accordingly, alumina fiber, silica fiber or composite oxide fiber of alumina and silica carrying the brown millerite type composite oxide particles the surface of which NOx reducing catalyst particles of rhodium (Rh) are dispersed on and adhered to and alumina fiber, silica fiber or composite oxide fiber of alumina and silica carrying the brown millerite type composite oxide particles the surface of which NOx reducing catalyst particles of iridium (Ir) are dispersed on and adhered to are mixed to thereby enhance the nitrogen oxide removing ability under presence of sulfur oxide.

When the brown millerite type composite oxide particles and NOx reducing catalyst particles are carried on alumina fiber, silica fiber or composite oxide fiber of alumina and silica including a glass phase such as boron oxide (B₂O₃) is dipped into an acid solution or an alkaline solution of noble metallic salt whereby the glass phase in the fiber is solved by acid to produce fine recess portions or pores. At the same time, the brown millerite type composite oxide particles and NOx reducing catalyst particles which are fine and have wide surface area are carried in the recess portions or pores on the surface of the fibers.

### EXAMPLE 2

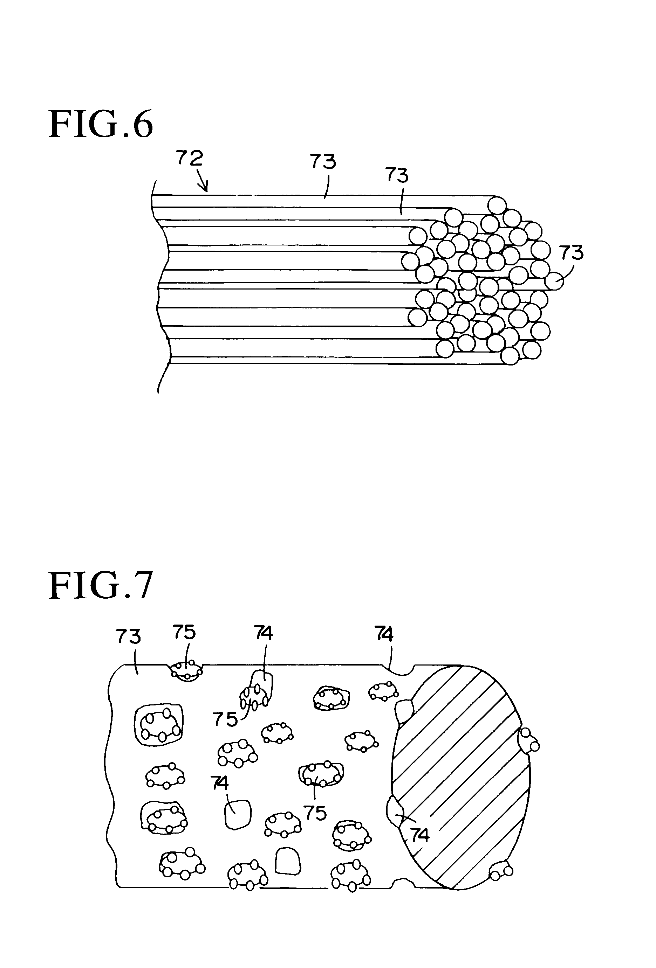

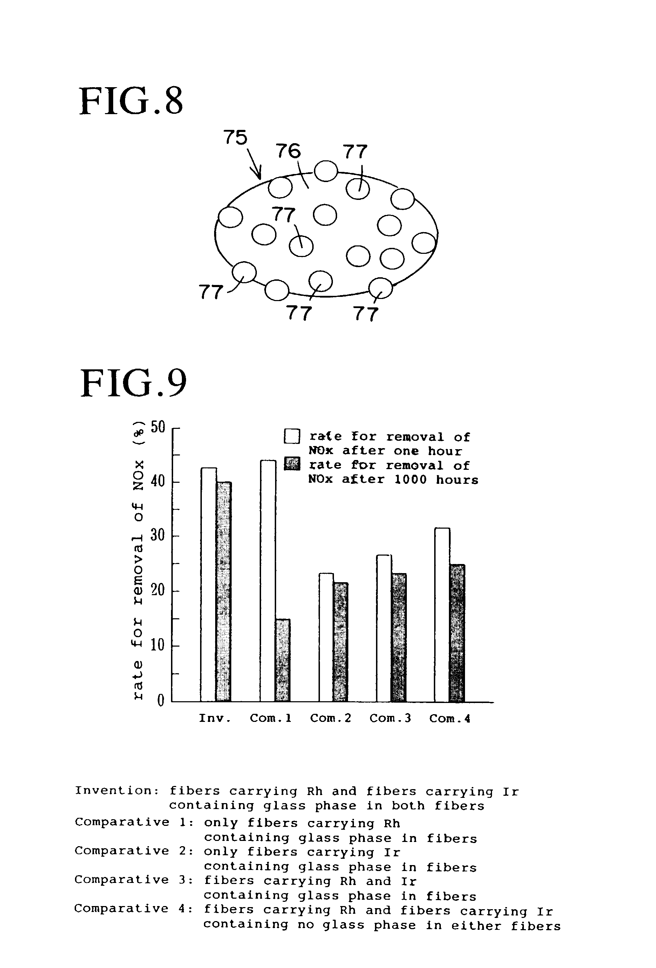

First, brown millerite type catalyst powder of which composition is Ba₃₋ₐSrₐY_{4-b}Zr_{b}O₉ (a=0 to 0.6, b=0 to 0.8) are synthesized from strontium (Sr) and zirconium (Zr). The brown millerite type NOx decomposing and adsorpting catalyst powder is mixed with a nitrate solution of the NOx reducing catalyst of rhodium (Rh) to prepare a slurry so that the mixing rate between the brown millerite type catalyst powder and the NOx reducing catalyst of rhodium (Rh) is 1 to 2 : 1 in mol ratio. An alumina fiber containing a glass phase of 3% boron oxide (B₂O₃) is dipped into the slurry, the solving of the glass phase and the carrying of the catalysts are simultaneously carried out, and heat treatment is then carried out for two hours in an atmosphere of argon (Ar) at temperature of 700 degrees Centigrade to obtain fibers 73 carrying exhaust gas purifying catalysts 75 as shown in FIGS. 6 and 7. Thus obtained fibers 73 were observed and analyzed, and as a result, it has been assured that a number of recess portions 74 are present on the surface of the fibers 73, and a composite of NOx decomposing and adsorpting catalyst of the brown millerite type composite oxide particles 76 of A₂B₂O₅ type and NOx reducing catalyst particles 77 of rhodium (Rh), as shown in FIG. 8 were present on the recess portions 74 and the surface lof the fibers 73.

### EXAMPLE 3

In a manner similar to the aforementioned method, a nitrate solution of iridium (Ir) was used in place of a nitrate salt solution of rhodium (Rh) to obtain alumina fibers carrying the brown millerite type composite oxide particles and the noble metal particles of iridium (Ir) as the NOx reducing catalyst. The crystal construction of the brown millerite type composite oxide particles carried on the obtained alumina fibers was mainly of the AB₂O₄ type. The exhaust gas purifying filter 72 was prepared, as shown in FIG. 6, which comprises the alumina fibers containing rhodium (Rh) and the alumina fibers containing iridium (Ir) are mixed and / or such arranged that the alumina fibers containing rhodium (Rh) and the alumina fibers containing iridium (Ir) are irregularly entangled.

As comparative examples, an exhaust gas purifying filter composed merely of fibers containing rhodium (Rh) (Comparative article 1), and an exhaust gas purifying filter composed merely of fibers containing iridium (Ir) (Comparative article 2) were prepared. As a further comparative example, an exhaust gas purifying filter (Comparative article 3) was prepared, in a manner similar to the aforementioned method, which is composed of fibers carrying the brown millerite type composite oxide particles, NOx reducing catalyst particles of the rhodium (Rh) and NOx reducing catalyst particles of iridium (Ir), using a mixed nitrate solution of rhodium (Rh) and iridium (Ir), in place of a nitrate salt solution of rhodium (Rh). Further, an exhaust gas purifying filter (Comparative article 4) was prepared, which is composed of fibers carrying the brown millerite type composite oxide particles and NOx reducing catalyst particles of rhodium (Rh), using composite oxide fiber of alumina and silica not containing a glass phase, in place of alumina fibers containing a glass phase of 3% boron acid (B₂O₃).

Each of four exhaust gas purifying apparatuses using the above exhaust gas purifying filters, respectively, was mounted to an exhaust pipe of the Diesel engine to measure the rate for removal of nitrogen oxide in the exhaust gases. FIG. 9 shows the measured results of the rate for removal of nitrogen oxide after one hour and the rate for removal of nitrogen oxide after 1,000 hours. It has been found from FIG. 9 that the exhaust gas purifying apparatus according to the present invention is less in change of the rates for removal of nitrogen oxide after one hour and after 1,000 hours than the comparative articles 1 to 4 and indicates the high rate for removal of nitrogen oxide. The exhaust gas purifying apparatus according to the present invention is excellent in resistance to poisoning of sulfur oxide and displays the high rate for removal of nitrogen oxide and durability since the surface area of the catalyst particles is wide.

### EXAMPLE 4

In the decomposing and adsorpting catalyst of brown millerite type composite oxide powder of which composition is Ba₃₋ₐSrₐY_{4-b} Zr_{b}O₉ (a=0 to 0.6, b=0 to 0.8) of the exhaust gas purifying catalyst described in EXAMPLE 2 when two constituent elements selected from the group consisting of calcium (Ca), titanium (Ti), hafnium (Hf), zinc (Zn), indium (In), holmium (Ho), gadolinium (Gd), dysprosium (Dy), terbium (Tb), europium (Eu), erbium (Er), neodymium (Nd) and cerium (Ce), in place of strontium (Sr) and zirconium (Zr), are used in a manner similar to the EXAMPLE 2, the exhaust gas purifying apparatus also displayed the high rate for removal of nitrogen oxide and high durability. Further, an exhaust gas purifying apparatus prepared by a combination of fibers carrying NOx reducing catalyst of ruthenium (Ru) and gold (Au) respectively in place of rhodium (Rh) and fibers carrying NOx reducing catalyst of palladium (Pd) and platinum (Pt) respectively in place of iridium (Ir) also displayed the high rate for removal of nitrogen oxide and high durability.

### DESCRIPTION OF REFERENCE NUMERALS

- 2:: inlet pipe
- 3:: conical tube
- 4:: housing
- 4a:: opening
- 5:: insulating material
- 6:: exhaust gas purifying filter
- 6a:: honeycomb carrier
- 6b:: cylindrical portion
- 7:: conical tube
- 8:: outlet pipe
- 10:: exhaust gas purifying apparatus
- 12:: inlet end
- 13:: electrode wire
- 13a:: electrode wire
- 14:: outlet end
- 16:: lead wire
- 16a:: lead wire
- 21:: wall portion
- 22:: passage
- 32:: exhaust gas purifying catalyst
- 32A:: exhaust gas purifying catalyst
- 32B:: exhaust gas purifying catalyst
- 33:: brown millerite type composite oxide particles
- 34:: NOx reducing catalyst particles
- 41:: conductive sensor
- 41a:: temperature switch
- 42:: protective tube
- 42a:: closed end wall
- 43:: detector
- 44:: insulating coating layer
- 45:: conductive plate
- 60:: electric heater
- 61:: power battery
- 62:: variable resistor
- 63:: electronic controller
- 72:: exhaust gas purifying filter
- 73:: fiber
- 74:: recess portions
- 75:: exhaust gas purifying catalyst
- 76:: brown millerite type composite oxide particles
- 77:: NOx reducing catalyst particles

## Claims

1. An exhaust gas purifying apparatus comprising an exhaust gas purifying catalyst including brown millerite type composite oxide particles and fine NOx reducing catalyst particles dispersed on and adhered to the surface of said brown millerite type composite oxide particles, said NOx reducing catalyst particles being at least one selected from the group consisting of rhodium (Rh), gold (Au), palladium (Pd), ruthenium (Ru), iridium (Ir) and platinum (Pt); a temperature adjusting portion for maintaining said exhaust gas purifying catalyst in predetermined temperature; and a sensor for controlling said temperature adjusting portion consisted of brown millerite type composite oxide.

2. An exhaust gas purifying apparatus comprising an exhaust gas purifying catalyst including brown millerite type composite oxide particles expressed by either of the general formulae A₃B₄O₉, A₂B₂O₅ or AB₂O₄ (A and B are constituent elements) as NOx decomposing and adsorpting catalyst and fine NOx reducing catalyst particles dispersed on and adhered to the surface of said brown millerite type composite oxide particles, an exhaust gas purifying filter comprised a carrier carrying said exhaust gas purifying catalyst, a conductive sensor comprised said brown millerite type composite oxide and an electronic controller for controlling the electric power supply to an electric heater surrounding said carrier so as to maintain said exhaust gas purifying catalyst in its active temperature region.

3. An exhaust gas purifying apparatus characterized in that composite particles of an exhaust gas purifying catalyst including brown millerite type composite oxide particles expressed by either of the general formulae A₃B₄O₉, A₂B₂O₅ or AB₂O₄ (A and B are constituent elements) and fine reducing catalyst particles selected from the group consisting of rhodium (Rh), gold (Au), palladium (Pd), ruthenium (Ru), iridium (Ir) and platinum (Pt) are disposed on the recess portions formed on the surface of at least one fiber selected from the group consisting of alumina fiber, silica fiber and composite oxide fiber of alimina and silica.

4. An exhaust gas purifying apparatus characterized in that brown millerite type composite oxide particles expressed by either of the general formulae A₃B₄O₉, A₂B₂O₅ or AB₂O₄ (A and B are constituent elements) and fine NOx reducing catalyst particles are carried on the surface of at least two fibers selected from the group consisting of alumina fiber, silica fiber and composite oxide fiber of alimina and silica, and said fibers include the first fiber in which said NOx reducing catalyst particles is selected from the group consisting of rhodium (Rh), gold (Au), palladium (Pd), ruthenium (Ru), iridium (Ir) and platinum (Pt) and the second fiber in which said NOx reducing catalyst particles is different from the said NOx reducing catalyst particles in said first fiber and is selected from the group consisting of rhodium (Rh), gold (Au), palladium (Pd), ruthenium (Ru), iridium (Ir) and platinum (Pt) and said first and second fibers being mixed.

5. An exhaust gas purifying apparatus characterized in that brown millerite type composite oxide particles expressed by either of the general formulae A₃B₄O₉, A₂B₂O₅ or AB₂O₄ (A and B are constituent elements) and fine NOx reducing catalyst particles are carried on the surface of at least two fibers selected from the group consisting of alumina fiber, silica fiber and composite oxide fiber of alimina and silica, and said fibers include the first fiber in which the structure of crystals of said brown millerite type composite oxide particles is expressed by the general formulae A₃B₄O₉ or A₂B₂O₅ and the second fiber in which the structure of crystals of said brown millerite type composite oxide particles is expressed by AB₂O₄ (A and B are constituent elements) and said first and second fibers being mixed.

6. An exhaust gas purifying apparatus according to claims 1 to 5, wherein the constituent elements of said brown millerite type composite oxide particles comprise at least two elements selected from the group consisting of the following rare earth elements, alkaline earth elements and noble metal elements.
rare earth elements: cerium (Ce), neodymium (Nd), europium (Eu), gadolinium (Gd), terbium (Tb), dysprosium (Dy), holmium (Ho), erbium (Er), yttrium (Y)
alkaline earth elements: calcium (Ca), strontium (Sr), barium (Ba)
noble metal elements: zinc (Zn), indium (In), titanium (Ti), zirconium (Zr), hafnium (Hf).

7. An exhaust gas purifying apparatus according to claims 1 to 5, wherein said NOx reducing catalyst particles is smaller than 25 nm in average particle diameter.

8. An exhaust gas purifying apparatus according to claim 3, wherein said recess portions are obtained by solving a glass phase contained in said fiber by an acid solution or an alkaline solution.
